# EUROPEAN PATENT APPLICATION

(11) **EP 4 614 962 A1**
(43) Date of publication of application: **10.09.2025**
(21) Application number: 25159642.5
(22) Date of filing: 24.02.2025
(51) Int. Cl.: H04N 7/18, G06V 10/96, G06V 20/52

(54) **IMAGE PROCESSING DEVICE, IMAGE PROCESSING METHOD, AND NON-TRANSITORY COMPUTER READABLE STORAGE MEDIUM**

(30) Priority: 06.03.2024 JP 2024033981
(71) Applicant: amnimo Inc., Musashino-shi, Tokyo 180-8750 (JP)
(72) Inventor: Kasahara, Kimito, Musashino-shi, Tokyo, 180-8750 (JP)
(74) Representative: Grünecker Patent- und Rechtsanwälte PartG mbB

(57) **Abstract**

An image processing device includes a storage unit configured to store table information in which at least imaging area identification information for identifying imaging areas of a camera of which an imaging area is changeable and detection program identification information for identifying detection programs for detecting a predetermined object from an image captured by the camera are correlated, and a detection unit configured to perform a process of identifying a detection program corresponding to an imaging area of the cameras using the table information stored in the storage unit and detecting the object from the image captured by the camera using the identified detection program.

## Description

### BACKGROUND

### Technical Fields

The present invention relates to an image processing device, an image processing method, and a non-transitory computer readable storage medium. Priority is claimed on Japanese Patent Application No. 2024-033981, filed on March 6, 2024, the contents of which are incorporated herein by reference.

### Description of Related Art

Recently, opportunities to use a monitoring system using a camera to automate security services or inspection services have increased. This monitoring system is a system that similarly performs a security guard's patrol round or an inspector's inspection round by capturing an image while sequentially switching between a plurality of cameras or capturing an image while sequentially switching a viewing angle and a direction of a single camera. Monitoring using the monitoring system is referred to as "camera patrol," "image patrol," or "preset patrol." A pan/tilt/zoom (PTZ) camera is used to switch a viewing angle and a direction of a camera and the like. In such a monitoring system, an image processing device that processes an image captured by a camera and detects an object included in the image may be used.

Japanese Unexamined Patent Application, First Publication No. 2010-226687 and Japanese Unexamined Patent Application, First Publication No. 2014-032039 discloses an image processing device according to the related art. Specifically, Japanese Unexamined Patent Application, First Publication No. 2010-226687 discloses an image processing device that can detect a plurality of objects from an input image regardless of a mobile object or a stationary object and cope with different requests. Japanese Unexamined Patent Application, First Publication No. 2014-032039 discloses a system that can reduce a computing load of an image recognizing process and accurately acquire an indicated value of even an analog instrument.

Many cameras are required for monitoring or inspecting all of monitoring objects, inspection objects, and other objects which are distributed. When a plurality of objects are set to be located in the field of view of one camera, the number of cameras can be decreased, but an image size of an object with respect to the whole image captured by the camera is decreased and it is difficult to accurately detect the object. When different types of objects are located in the field of view of the camera, a plurality of types of image processing which are prepared in advance have to be performed on a captured image, and thus it is not possible to efficiently detect the objects.

The present invention was made in consideration of the aforementioned circumstances, and an objective thereof is to provide an image processing device, an image processing method, and a non-transitory computer readable storage medium that can efficiently and accurately detect objects using a relatively small number of cameras even when the objects are distributed.

### SUMMARY

In order to achieve the aforementioned objective, an image processing device (1) according to a first aspect of the present invention includes a storage unit (24) configured to store table information (TB, TB1) in which at least imaging area identification information for identifying imaging areas (A1, A2, and B1 to B3) of a camera (A and B) of which an imaging area is changeable and detection program identification information for identifying detection programs (PG) for detecting a predetermined object from an image captured by the camera are correlated and a detection unit (32) configured to perform a process of identifying a detection program corresponding to an imaging area of the cameras using the table information stored in the storage unit and detecting the object from the image captured by the camera using the identified detection program.

An image processing device according to a second aspect of the present invention is the image processing device according to the first aspect of the present invention, further including a control unit (31) configured to instruct the camera to set the imaging area of the camera to a predetermined imaging area, wherein the detection unit identifies the detection program using the table information on the basis of the imaging area identification information for identifying the predetermined imaging area set by the control unit.

An image processing device according to a third aspect of the present invention is the image processing device according to the second aspect of the present invention, wherein the storage unit stores imaging schedule information (SC) in which at least imaging time information for defining a time at which an image is captured by the camera and the imaging area identification information are correlated, and the control unit instructs the camera on the basis of the imaging schedule information stored in the storage unit.

An image processing device according to a fourth aspect of the present invention is the image processing device according to the first aspect of the present invention, wherein, when the camera sets the imaging area to the predetermined imaging area, the detection unit identifies the detection program using the table information on the basis of the imaging area identification information for identifying the predetermined imaging area transmitted from the camera.

An image processing device according to a fifth aspect of the present invention is the image processing device according to the fourth aspect of the present invention, further including a control unit (31) configured to cause the camera to set image schedule information in which at least imaging time information for defining a time at which an image is captured by the camera and the imaging area identification information are correlated.

An image processing device according to a sixth aspect of the present invention is the image processing device according to the third or fifth aspect of the present invention, wherein the table information is information in which camera identification information for identifying a plurality of cameras, the imaging area identification information, and the detection program identification information are correlated, the imaging schedule information is information in which the imaging time information, the camera identification information, and the imaging area identification information are correlated, and the detection unit and the control unit identify the camera using the camera identification information.

An image processing device according to a seventh aspect of the present invention is the image processing device according to any one of the first to sixth aspects of the present invention, wherein the detection unit performs a preliminary process on an image captured by the camera before performing the process of detecting the object from the image captured by the camera using the identified detection program.

An image processing device according to an eighth aspect of the present invention is the image processing device according to the seventh aspect of the present invention, wherein the table information is information in which the imaging area identification information, the detection program identification information, and preliminary process identification information for identifying the preliminary process are correlated, and the detection unit performs the preliminary process based on the imaging area of the camera using the table information.

An image processing device according to a ninth aspect of the present invention is the image processing device according to the third or fifth aspect of the present invention, wherein the control unit performs control such that imaging conditions of the camera are changed according to the image captured by the camera.

An image processing device according to a tenth aspect of the present invention is the image processing device according to the third or fifth aspect of the present invention, wherein the control unit changes the imaging time information according to a state of the object detected by the detection unit.

An image processing method according to another aspect of the present invention includes a first step of causing a storage unit (24) to store table information (TB, TB1) in which at least imaging area identification information for identifying imaging areas (A1, A2, and B1 to B3) of a camera (A and B) of which an imaging area is changeable and detection program identification information for identifying detection programs (PG) for detecting a predetermined object from an image captured by the camera are correlated and a second step (S14) of causing a detection unit (32) to perform a process of identifying a detection program corresponding to an imaging area of the cameras using the table information stored in the storage unit and detecting the object from the image captured by the camera using the identified detection program.

A non-transitory computer readable storage medium according to another aspect of the present invention, storing an image processing program that causes a computer to perform a first step of storing table information (TB, TB1) in which at least imaging area identification information for identifying imaging areas (A1, A2, and B1 to B3) of a camera (A and B) of which an imaging area is changeable and detection program identification information for identifying detection programs (PG) for detecting a predetermined object from an image captured by the camera are correlated and a second step (S14) of performing a process of identifying a detection program corresponding to an imaging area of the cameras using the table information and detecting the object from the image captured by the camera using the identified detection program.

According to the present invention, it is possible to efficiently and accurately detect objects using a relatively small number of cameras even when the objects are distributed.

Further features and aspects of the present disclosure will become apparent from the following detailed description of exemplary embodiments with reference to the attached drawings.

### BRIEF DESCRIPTION OF THE DRAWINGS

FIG. 1 is a diagram illustrating a configuration of a monitoring system using an image processing device according to an embodiment of the present invention.
FIG. 2 is a block diagram illustrating a partial configuration of the image processing device according to the embodiment of the present invention.
FIG. 3 is a diagram illustrating an example of a detection program determination table according to the embodiment of the present invention.
FIG. 4 is a diagram illustrating an example of imaging schedule information according to the embodiment of the present invention.
FIG. 5 is a flowchart illustrating an example of operations of the image processing device according to the embodiment of the present invention.
FIG. 6 is a flowchart illustrating another example of operations of the image processing device according to the embodiment of the present invention.
FIG. 7 is a diagram illustrating an example of a detection program determination table according to a modified example of the embodiment of the present invention.

### DETAILED DESCRIPTION OF THE EMBODIMENTS

Hereinafter, an image processing device, an image processing method, and a non-transitory computer readable storage medium according to an embodiment of the present invention will be described in detail with reference to the accompanying drawings. In the following description, the summary of the embodiment of the present invention will be first described, and details of the embodiment of the present invention will be then described.

### [Summary]

The embodiment of the present invention provides an image processing device, an image processing method, and a non-transitory computer readable storage medium that can efficiently and accurately detect objects using a relatively small number of cameras even when the objects are distributed. The embodiment of the present invention can be applied to, for example, reading of a plurality of types of instruments in a plant, a factory, or the like or monitoring of a water level of a river and monitoring of a riverside area (for example, detection of trash throwing).

In a system using a camera, a plurality of types of monitoring objects, inspection objects, and other objects may be disposed in the field of view of one camera. For example, in various facilities such as plants and factories, a plurality of types of instruments may be disposed in the field of view of one camera to read indicated values of instruments using the camera.

Here, there are various types of instruments such as a circular type, a rectangular type, a level type, and a 7-segment light emitting diode (LED) type, and there are different processes of logics (for example, processing details of artificial intelligence (AI)) for detecting indicated values of instruments from images of the instruments to correspond to the types of instruments. When a plurality of types of instruments are disposed in the field of view of one camera, the indicated values of the instruments have to be detected from an image captured by the camera using a plurality of types of logics, and thus it is difficult to efficiently detect an object.

In the embodiment of the present invention, table information in which at least imaging area identification information and detection program identification information are correlated is stored. The imaging area identification information is information for identifying an imaging area of a camera of which the imaging area is changeable. The detection program identification information is information for identifying a detection program for detecting a predetermined object from an image captured by a camera. In the embodiment of the present invention, a process of identifying a detection program corresponding to an imaging area of the camera using the table information and detecting an object from the image captured by the camera using the identified detection program is performed. Accordingly, since objects are detected using the detection programs corresponding to the imaging areas of the camera for each imaging area of the camera, it is possible to efficiently and accurately detect objects using a relatively small number of cameras even when the objects are distributed.

### [Embodiment]

### <Monitoring system>

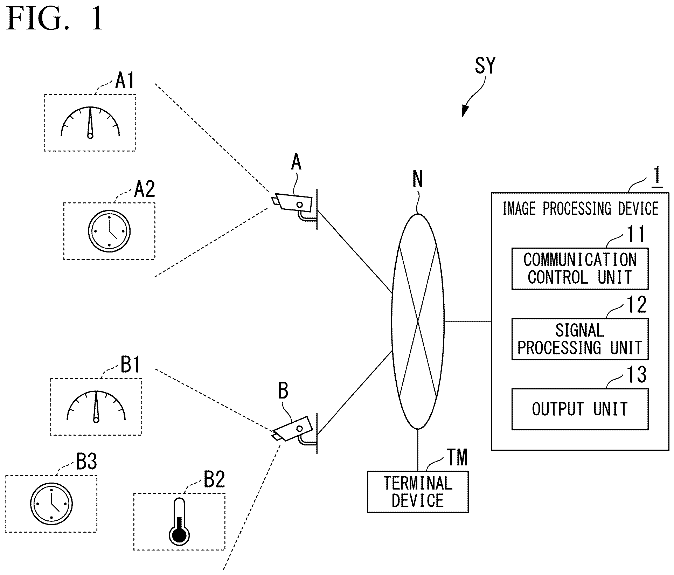

FIG. 1 is a diagram illustrating a configuration of a monitoring system using the image processing device according to the embodiment of the present invention. As illustrated in FIG. 1, the monitoring system SY includes cameras A and B and an image processing device 1 which are communicatively connected via a network N. The network N is, for example, a local area network (LAN) provided in a plant, a factory, or other facilities. The network N may be one of a network in which wired communication is possible, a network in which wireless communication is possible, and a network in which both wired communication and wireless communication are possible.

The cameras A and B are cameras of which an imaging area is changeable. The cameras A and B are PTZ cameras that can perform panning, tilting, and zooming through a remote operation. Panning is rotation in a horizontal (leftward and rightward) direction, tilting is rotation in a vertical (upward and downward) direction, and zooming is enlargement or reduction of a captured image. The cameras A and B can set (preset) one or more imaging areas. Setting of an imaging area is performed by, for example, a user of the image processing device 1. The cameras A and B may be able to perform only one or only two of panning, tilting, and zooming. The number of cameras is not particularly limited and may be one or three or more.

For the purpose of easy understanding, it is assumed that two or more instruments (objects) are disposed in an area which can be imaged by each of the cameras A and B and two or more imaging areas are set for the area which can be imaged by each of the cameras A and B. In the example illustrated in FIG. 1, imaging areas A1 and A2 are set for the camera A, and imaging areas B1 to B3 are set for the camera B.

In the example illustrated in FIG. 1, the same type of instruments (for example, circular one-needle meters) are disposed in the imaging area A1 of the camera A and the imaging area B1 of the camera B. The same type of instruments (for example, circular two-needle meters) are disposed in the imaging area A2 of the camera A and the imaging area B3 of the camera B. A different type of instrument (for example, a level meter) is disposed in the imaging area B2 of the camera B. The positions, the number, and the sizes of the imaging areas are arbitrary, and the types of the instruments disposed in the imaging areas are arbitrary.

The image processing device 1 includes a communication control unit 11, a signal processing unit 12, and an output unit 13 as functional units, acquires images captured by the cameras A and B via the network N, performs necessary processes on the acquired images, and outputs the process result. The communication control unit 11 performs acquisition of images captured by the cameras A and B via the network N and control of the cameras A and B via the network N. Here, examples of the control of the cameras A and B include setting of an imaging area, setting of an imaging schedule, control of an imaging timing, and change of imaging conditions.

The signal processing unit 12 performs necessary processes on the images acquired from the cameras A and B via the network N. For example, the signal processing unit 12 performs a process of detecting instruments from the images captured by the cameras A and B and performs a process of acquiring indicated values of the detected instruments and the like. The output unit 13 outputs the images acquired by the communication control unit 11, the process results from the signal processing unit 12, and the like. For example, the output unit 13 displays the images acquired by the communication control unit 11, the process results from the signal processing unit 12, and the like or outputs the data to the outside.

<Image processing device>

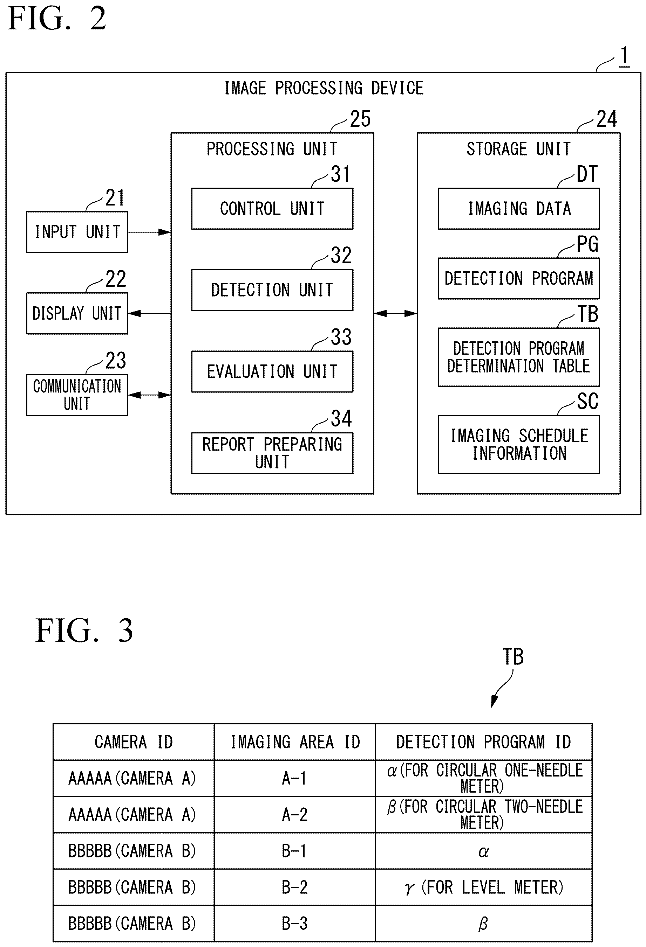

FIG. 2 is a block diagram illustrating a partial configuration of the image processing device according to the embodiment of the present invention. As illustrated in FIG. 2, the image processing device 1 includes an input unit 21, a display unit 22, a communication unit 23, a storage unit 24, and a processing unit 25. The image processing device 1 may be provided as an independent device or may be assembled into a communication device such as a gateway or a router. The image processing device 1 may be realized, for example, by a computer such as a personal computer or a workstation.

The input unit 21 outputs an instruction based on an operation of a user of the image processing device 1 (an instruction for the image processing device 1) to the processing unit 25. The input unit 21 may be, for example, a switch such as a dip switch or an input device such as a keyboard or a pointing device connected to the image processing device 1 in a wired or wireless manner. The display unit 22 displays various types of information output from the processing unit 25. The display unit 22 may include, for example, a display device such as an LED or a liquid crystal display device. The display device may be connected to the image processing device 1 in a wired or wireless manner. The input unit 21 and the display unit 22 may be physically separated from each other or may be physically unified like a touch panel type liquid crystal display device having a display function and an operation function.

The communication unit 23 communicates with the cameras A and B or a terminal device TM such as a personal computer connected to the network N (see FIG. 1) under the control of the processing unit 25. The communication unit 23 transmits various types of information (for example, control information or reports which will be described later) output from the processing unit 25 to the cameras A and B or the terminal device TM via the network N. The communication unit 23 receives various types of information (for example, captured images, identification information of cameras and imaging areas, or various types of data prepared by the terminal device TM) transmitted from the cameras A and B or the terminal device TM via the network N and outputs the received information to the processing unit 25.

The storage unit 24 includes, for example, an auxiliary storage device such as a volatile or nonvolatile semiconductor storage device, a hard disk drive (HDD), or a solid state driver (SSD) and stores various types of information. Specifically, the storage unit 24 stores imaging data DT, a detection program PG, a detection program determination table TB (table information), and imaging schedule information SC. Various programs for realizing the functions of the image processing device 1, data temporarily used for the processing unit 25 to perform the processes, and the like may be stored in the storage unit 24.

The imaging data DT is data of images captured by the cameras A and B and is data which the image processing device 1 acquires from the cameras A and B via the network N. The imaging data DT may be images from a time point at which a newest image has been captured to a time point back by a predetermined period to the past out of images captured by the cameras A and B in consideration of the capacity of the storage unit 24.

The detection program PG is a program for detecting a predetermined instrument (a predetermined object) from the images captured by the cameras A and B and acquiring an indicated value of the detected instrument. The detection program PG is prepared at least for each type of the instruments imaged by the cameras A and B. For example, in the example illustrated in FIG. 1, a detection program PG for a "circular one-needle meter," a detection program PG for a "circular two-needle meter," and a detection program PG for a "level meter" are prepared.

The detection program determination table TB is a table in which a camera ID (camera identification information), an imaging area ID (imaging area identification information), and a detection program ID (detection program identification information) are correlated. The camera ID is information for identifying the cameras A and B, the imaging area ID is information for identifying the imaging areas A1, A2, and B1 to B3, and the detection program ID is information for identifying the detection program PG. The detection program determination table TB is prepared, for example, by allowing a user of the image processing device 1 to operate the terminal device TM or to operate the input unit 21. The prepared detection program determination table TB is stored in the storage unit 24 (a first step).

FIG. 3 is a diagram illustrating an example of a detection program determination table according to the embodiment of the present invention. In the example illustrated in FIG. 3, the camera ID of the camera A is "AAAAA," and the camera ID of the camera B is "BBBBB." For example, a media access control (MAC) address can be used as the camera ID. The imaging area IDs of the imaging areas A1 and A2 in FIG. 1 are "A-1" and "A-2," and the imaging area IDs of the imaging areas B1, B2, and B3 are "B-1," "B-2," and "B-3." Arbitrary identification information can be used as the imaging area IDs.

In the example illustrated in FIG. 3, the detection program ID of the detection program for a "circular one-needle meter" is "α," and the detection program ID of the detection program for a "circular two-needle meter" is "β," and the detection program ID of the detection program for a "level meter" is "y."

In the detection program determination table TB illustrated in FIG. 3, "AAAAA," "A-1," and "α" are correlated, and "AAAAA," "A-2," and "β" are correlated. "BBBBB," "B-1," and "α" are correlated, "BBBBB," "B-2," and "γ" are correlated, and "BBBBB," "B-3," and "β" are correlated.

The imaging schedule information SC is information in which the camera ID, the imaging area ID, and an imaging time (imaging time information) are correlated. The imaging time is information indicating a time at which the cameras A and B capture an image. Similarly to the detection program determination table TB, the imaging schedule information SC is prepared, for example, by allowing a user of the image processing device 1 to operate the terminal device TM or to operate the input unit 21. The prepared imaging schedule information SC is stored in the storage unit 24.

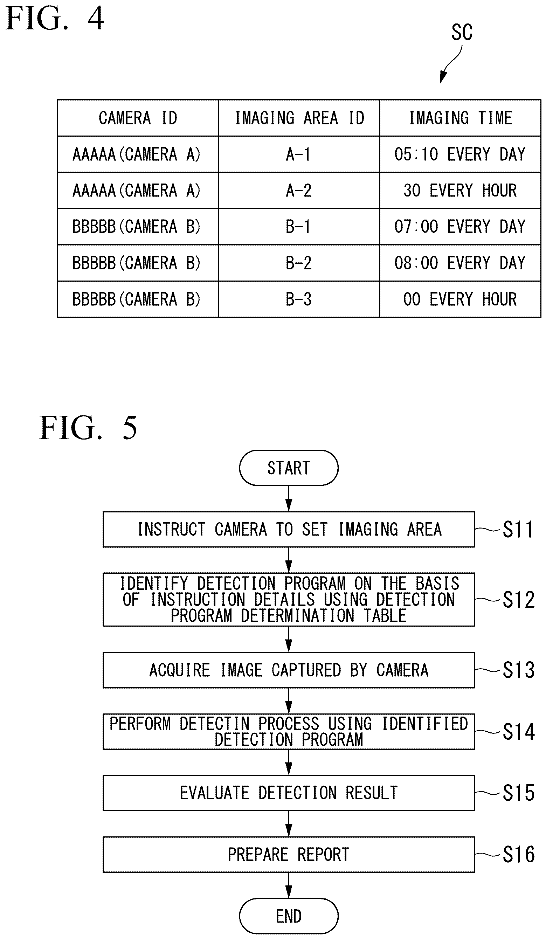

FIG. 4 is a diagram illustrating an example of the imaging schedule information according to the embodiment of the present invention. In the example illustrated in FIG. 4, the camera IDs of the cameras A and B and the imaging area IDs of the imaging areas A1, A2, and B1 to B3 are the same as in the example illustrated in FIG. 3. In the example illustrated in FIG. 4, the imaging time is presented by a specific time every day (00:00 every day) or a specific time every hour (00 every hour). As the imaging time, for example, a time indicated by a date and a time can also be set.

In the imaging schedule information SC illustrated in FIG. 4, "AAAAA," "A-1," and "05:10 every day" are correlated, and "AAAAA," "A-2," and "30 every hour" are correlated. "BBBBB," "B-1," and "07:00 every day" are correlated, "BBBBB," "B-2," and "08:00 every day" are correlated, and "BBBBB," "B-3," and "00 every hour" are correlated.

The processing unit 25 includes a control unit 31, a detection unit 32, an evaluation unit 33, and a report preparing unit 34. The processing unit 25 performs various processes required for monitoring using the images acquired from the cameras A and B.

The control unit 31 instructs the cameras A and B to set the imaging areas to predetermined image areas. For example, the control unit 31 performs the instruction on the basis of the imaging schedule information SC stored in the storage unit 24. The control unit 31 can also set the imaging schedule information SC stored in the storage unit 24 in the cameras A and B. When the imaging schedule information SC is set in the cameras A and B, imaging based on the imaging schedule information SC is performed by the cameras A and B without the instruction from the control unit 31.

The detection unit 32 identifies detection programs PG corresponding to the imaging areas of the cameras A and B using the detection program determination table TB stored in the storage unit 24. The detection unit 32 detects instruments from the images captured by the cameras A and B using the identified detection programs PG and performs a process of acquiring indicated values of the detected instruments.

Here, when the control unit 31 has instructed the cameras A and B as described above, the detection unit 32 identifies the detection programs PG using the detection program determination table TB on the basis of the imaging area IDs for identifying the imaging areas set by the control unit 31 and the camera IDs. On the other hand, when the control unit 31 has set the imaging schedule information SC in the cameras A and B and the cameras A and B have set the imaging areas to predetermined imaging areas, the detection unit 32 identifies the detection programs PG using the detection program determination table TB on the basis of the camera IDs and the imaging area IDs transmitted from the cameras A and B.

The evaluation unit 33 evaluates the detection result from the detection unit 32. For example, the evaluation unit 33 evaluates whether the indicated value of the instrument acquired by the detection unit 32 is greater than a prescribed threshold value. The evaluation unit 33 outputs the evaluation result to the report preparing unit 34. The report preparing unit 34 prepares a report for reporting a monitoring result. The report preparing unit 34 adds the evaluation result from the evaluation unit 33 to the report or changes details of the report according to the evaluation result from the evaluation unit 33.

The communication control unit 11 illustrated in FIG. 1 corresponds to, for example, the communication unit 23 and the control unit 31 illustrated in FIG. 2. The signal processing unit 12 illustrated in FIG. 1 corresponds to, for example, the detection unit 32, the evaluation unit 33, and the report preparing unit 34 illustrated in FIG. 2. The output unit 13 illustrated in FIG. 1 corresponds to, for example, the display unit 22 and the communication unit 23 illustrated in FIG. 2.

The functions of the processing unit 25 (the functions of the control unit 31, the detection unit 32, the evaluation unit 33, and the report preparing unit 34) of the image processing device 1 are realized by causing hardware such as a central processing unit (CPU) to execute programs for realizing the functions. That is, the functions of the processing unit 25 of the image processing device 1 are cooperatively realized by software and hardware resources. Since the functions of the processing unit 25 of the image processing device 1 are cooperatively realized by software and hardware resources, it is possible to easily perform, for example, update, deletion, and addition of a function.

The functions of the image processing device 1 are preferably cooperatively realized by software and hardware resources, but do not exclude realization using dedicated hardware. The functions of the image processing device 1 may be realized, for example, by hardware such as a field-programmable gate array (FPGA), a large scale integration (LSI) circuit, or an application-specific integrated circuit (ASIC).

### <Operations of monitoring system>

Operations of the monitoring system will be described below. The operations of the monitoring system SY are slightly different between when the imaging schedule information SC is not set in the cameras A and B and when the imaging schedule information SC is set in the cameras A and B. When the imaging schedule information SC is not set in the cameras A and B, the image processing device 1 instructs the cameras A and B of imaging areas on the basis of the imaging schedule information SC and causes the cameras A and B to capture an image. On the other hand, when the imaging schedule information SC is set in the cameras A and B, the cameras A and B set imaging areas on the basis of the imaging schedule information SC and capture an image.

FIG. 5 is a flowchart illustrating an example of the operations of the image processing device according to the embodiment of the present invention. Specifically, the flowchart illustrated in FIG. 5 is a flowchart when the image processing device 1 instructs the cameras A and B of imaging areas on the basis of the imaging schedule information SC and causes the cameras A and B to capture an image. The flowchart illustrated in FIG. 5 is performed, for example, the imaging time set in the imaging schedule information SC comes.

When the flowchart illustrated in FIG. 5 starts, the control unit 31 of the image processing device 1 first instructs the cameras A and B to set an imaging area (Step S11). Specifically, the control unit 31 reads a camera ID and an imaging area ID correlated with the imaging time corresponding to the current time out of the imaging times set in the imaging schedule information SC from the imaging schedule information SC. Then, the control unit 31 instructs the camera identified by the read camera ID to set the imaging area thereof to the imaging area identified by the read imaging area ID.

For example, when the current time is 05:10, the control unit 31 reads "AAAAA" and "A-1" correlated with "05:10 every day" in FIG. 4. Then, the control unit 31 instructs the camera A identified by the read "AAAAA" to set the imaging area of the camera A to the imaging area identified by "A-1." When this instruction is performed, the camera A sets the imaging area to the imaging area identified by the "A-1" on the basis of the instruction from the control unit 31 and images the set imaging area.

Then, the detection unit 32 of the image processing device 1 identifies a detection program PG on the basis of instruction details from the control unit 31 using the detection program determination table TB (Step S12). Specifically, the detection unit 32 identifies a detection program PG by reading the detection program ID correlated with the camera ID and the imaging area ID read by the control unit 31 from the detection program determination table TB.

For example, it is assumed that the camera ID read by the control unit 31 is "AAAAA" and the read imaging area ID is "A-1." The detection unit 32 reads "α" correlated with "AAAAA" and "A-1" from the detection program determination table TB illustrated in FIG. 3. Accordingly, the detection program PG is identified as a detection program PG for a "circular one-needle meter."

Subsequently, the processing unit 25 controls the communication unit 23 such that an image captured by the camera is acquired (Step S13). For example, when the control unit 31 instructs the camera A to set the imaging area in Step S11, the processing unit 25 acquires an image captured by the camera A.

Subsequently, the detection unit 32 performs a detection process using the detection program identified in Step S12 (Step S14: a second step). Specifically, the detection unit 32 starts the detection program PG identified in Step S12 and receives an input of the image acquired in Step S13. Accordingly, for example, when the detection program PG is a detection program for a "circular one-needle meter," a "circular one-needle meter" included in the image acquired in Step S13 is detected, and an indicated value thereof is acquired.

Subsequently, the evaluation unit 33 evaluates the detection result acquired in Step S14 (Step S15). For example, the evaluation unit 33 evaluates whether the indicated value of the "circular one-needle meter" obtained in Step S14 is greater than a prescribed threshold value.

When this process flow ends, the report preparing unit 34 prepares a report (a report of the monitoring result) (Step S16). Specifically, the report preparing unit 34 prepares the report on the basis of the image acquired in Step S13, the detection result in Step S14, the evaluation result of Step S15, and the like. The format of the report is not particularly limited.

For example, the report preparing unit 34 prepares a report in which the image of a "circular one-needle meter" is included and an indicated value thereof is included along with the threshold value. The report preparing unit 34 may prepare a report including the evaluation result of Step S15. For example, when the indicated value of the meter in the evaluation result is greater or less than the threshold value, for example, a check result in the report may be set to "abnormal," or a comment corresponding thereto may be automatically added to report details.

Here, in the example illustrated in FIG. 5, it is assumed that the process of Step S16 is performed after Step S15 for the purpose of easy understanding. However, the process of Step S16 may be performed after the process of Step S15 has been performed predetermined times. Accordingly, a report indicating monitoring results in a certain period can be prepared.

The report prepared by the report preparing unit 34 can be displayed on the display unit 22, for example, by allowing a user of the image processing device 1 to operate the input unit 21 and to input a predetermined instruction. When the user of the image processing device 1 operates the terminal device TM to input requirements for the image processing device 1, the report may be output as data from the communication unit 23 to the terminal device TM. When the report is prepared, the prepared report may be uploaded to a preset specific server or transmitted to a preset specific terminal device (for example a smartphone or a tablet) by an e-mail or the like. The report uploaded to the server may be referred to, for example, using a terminal device such as a smartphone or a tablet.

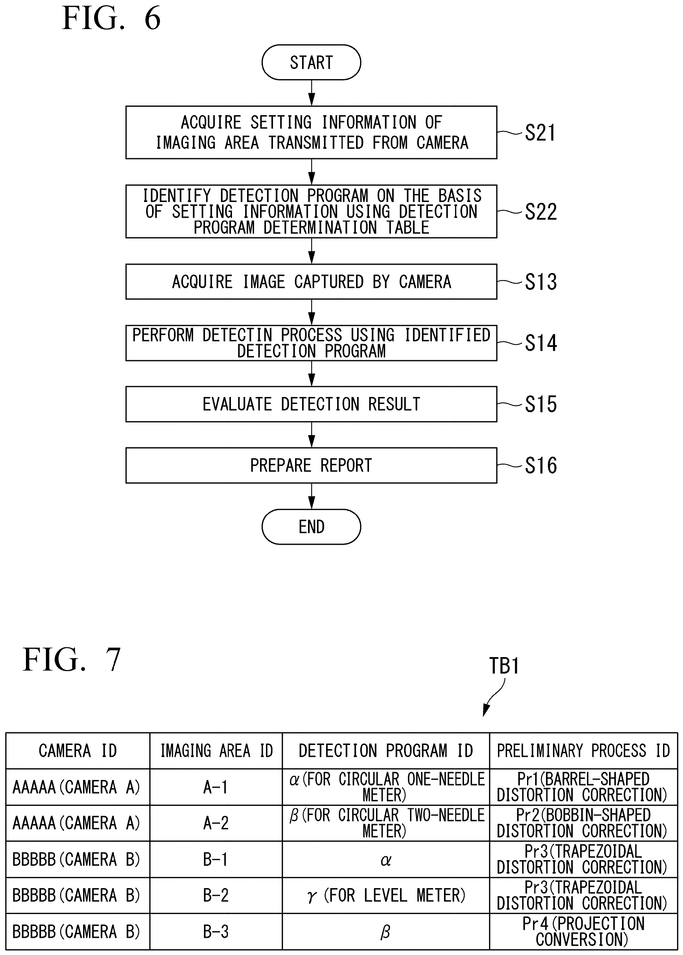

FIG. 6 is a flowchart illustrating another example of the operations of the image processing device according to the embodiment of the present invention. Specifically, the flowchart illustrated in FIG. 6 is a flowchart when the cameras A and B set an imaging area and capture an image on the basis of the imaging schedule information SC. In FIG. 6, the same steps as the steps illustrated in FIG. 5 will be referred to by the same reference signs.

When the imaging time set in the imaging schedule information SC comes, the cameras A and B read an imaging area ID from the imaging schedule information SC. Specifically, the cameras A and B read an imaging area ID in which a camera ID is correlated with their own camera IDs out of the camera IDs and the imaging area IDs correlated to the imaging time corresponding to the current time.

The cameras A and B set the imaging area to an imaging area identified by the read imaging area ID and image the set imaging area. Then, setting information indicating that the imaging area is set is transmitted to the image processing device 1. The setting information transmitted from the cameras A and B to the image processing device 1 includes the imaging area ID for identifying the set imaging area. The setting information may include the camera ID. The processes of the flowchart illustrated in FIG. 6 are performed whenever the setting information transmitted from the cameras A and B is received by the communication unit 23 of the image processing device 1.

When the processes of the flowchart illustrated in FIG. 6 start, the processing unit 25 of the image processing device 1 first acquires the setting information transmitted from the cameras A and B and received by the communication unit 23 (Step S21). Then, the detection unit 32 of the image processing device 1 identifies a detection program PG on the basis of the acquired setting information using the detection program determination table TB (Step S22). Specifically, the detection unit 32 identifies the detection program PG by reading the detection program ID correlated with the camera ID and the imaging area ID included in the setting information form the detection program determination table TB.

For example, it is assumed that the camera ID included in the setting information is "AAAAA" and the imaging area ID is "A-2." The detection unit 32 reads "β" correlated with "AAAAA" and "A-2" from the detection program determination table TB illustrated in FIG. 3. Accordingly, the detection program PG is identified as a detection program for a "circular two-needle meter."

When the detection program PG is identified, the process of acquiring an image captured by the camera (Step S13), the detection process using the identified detection program (Step S14), the process of evaluating the detection result (Step S15), and the process of preparing a report (Step S16) are performed similarly to the flowchart illustrated in FIG. 5. The processes of Steps S13 to S16 illustrated in FIG. 6 are the same as the processes of Steps S13 to S16 illustrated in FIG. 5, and thus detailed description thereof will be omitted.

As described above, in this embodiment, the detection program determination table TB in which a camera ID, an imaging area ID, and a detection program ID are correlated is stored in the storage unit 24. In this embodiment, detection programs PG corresponding to the imaging areas A1, A2, and B1 to B3 of the cameras A and B are identified using the detection program determination table TB, instruments are detected from the images captured by the cameras A and B using the identified detection programs PG, and indicated values of the detected instruments are acquired. Accordingly, since an instrument is detected using an appropriate detection program PG corresponding to each of the imaging areas A1, A2, and B1 to B3 of the cameras A and B for each of the imaging areas A1, A2, and B1 to B3 of the cameras A and B, it is possible to efficiently and accurately detect instruments using a relatively small number of cameras even when the objects are distributed.

### <Modified example>

(1) The detection unit 32 may perform a preliminary process on the images captured by the cameras A and B before performing the process of detecting instruments from the images captured by the cameras A and B using the identified detection programs PG. Examples of the preliminary process include correction of image distortion caused due to lens characteristics of the cameras A and B and correction of image distortion caused due to positional relationships between the cameras A and B and the instruments.

For example, when lens characteristics of the cameras A and B change according to a degree of zoom and a captured image is distorted, a process of correcting the distortion is performed as the preliminary process on the captured image. When the instruments do not face the cameras A and B from the front and captured images are distorted, trapezoidal correction or projection conversion is performed as the preliminary process on the captured images. By performing this preliminary process, it is possible to enhance detection accuracy of the detection programs.

FIG. 7 is a diagram illustrating an example of a detection program determination table according to a modified example of the embodiment of the present invention. As illustrated in FIG. 7, the detection program determination table TB1 according to this modified example is a table in which a preliminary process ID (preliminary process identification information) in addition to a camera ID, an imaging area ID, and a detection program ID is correlated. Parameters used for the preliminary process may be correlated in addition to the preliminary process ID. The preliminary process ID is information for identifying the preliminary process performed by the detection unit 32. Similarly to the detection program determination table TB, the detection program determination table TB1 is prepared, for example, by allowing a user of the image processing device 1 to operate the terminal device TM or to operate the input unit 21. The prepared detection program determination table TB1 is stored in the storage unit 24 (the first step).

In the example illustrated in FIG. 7, a preliminary process ID of "barrel-shaped distortion correction" is "Pr1,"and a preliminary process ID of "bobbin-shaped distortion correction" is "Pr2." A preliminary process ID of "trapezoidal distortion correction" is "Pr3," and a preliminary process ID of "projection conversion" is "Pr4."

In this modified example, the detection unit 32 identifies detection programs PG corresponding to the imaging areas of the cameras A and B and identifies the preliminary processes corresponding to the imaging areas of the cameras A and B using the detection program determination table TB1 illustrated in FIG. 7. The detection unit 32 performs a process of performing the identified preliminary processes on the images captured by the cameras A and B, detecting instruments from the images subjected to the preliminary processes using the identified detection programs PG, and acquiring indicated values of the detected instruments.

The preliminary process may be switched for each imaging area without using the detection program determination table TB1 illustrated in FIG. 7. For example, regarding image distortion caused due to the positional relationships between the cameras A and B and the instruments, directions of the instruments may be estimated from the images, and trapezoidal correction or the like based on the estimated directions may be performed.

(2) The control unit 31 may perform control such that imaging conditions of the cameras A and B are changed according to the images captured by the cameras A and B. Examples of the control for changing the imaging conditions of the cameras A and B include control for turning on or off a power supply of an illumination device or an infrared radiation device corresponding to each imaging area according to brightness or contrast of the images.

When brightness or contrast of an image is low, the detection accuracy of a detection program PG may decrease. Accordingly, for example, when an instrument installed in a dark imaging area is imaged, it is possible to enhance the detection accuracy by turning on the power supply of the illumination device or the infrared radiation device corresponding to the imaging area to improve the imaging conditions before switching and imaging the imaging area. The power supply of the illumination device or the infrared radiation device corresponding to the imaging area may be manually turned on or off by the user of the image processing device 1.

(3) The control unit 31 may change the imaging time according to an instrument state detected by the detection unit 32. Specifically, the control unit 31 may change the imaging time according to the indicated value by the detection unit 32 or the evaluation result from the evaluation unit 33. For example, when indicated values acquired in the past by the detection unit 32 have a large deviation width or when the frequency of abnormality in the evaluation unit 33 is high, the control unit 31 changes the imaging time such that an imaging period is shortened.

While the image processing device, the image processing method, and the non-transitory computer readable storage medium according to the embodiment and the modified examples of the present invention have been described above, the present invention is not limited to the embodiment and the modified examples and can be freely modified within the scope of the present invention. For example, an object in the aforementioned embodiment is an instrument, but the object is not limited to an instrument and may be a person, a vehicle, or the like. When the object is a person or a vehicle, a detection program PG for detecting a person or a vehicle needs to be prepared. When the object is a person, a detection program PG for detecting a specific motion (such as falling or a suspicious motion) of a person can be prepared.

In the aforementioned embodiment, the imaging areas A1, A2, and B1 to B3 of the cameras A and B are set to image only one instrument. When a plurality of instruments are imaged for each of the imaging areas A1, A2, and B1 to B3 of the cameras A and B, detection may be able to be performed using the same method as in the related art. That is, it is also possible to detect a plurality of instruments using a plurality of detection programs PG.

## Claims

1. An image processing device comprising:
a storage unit configured to store table information in which at least imaging area identification information for identifying imaging areas of a camera of which an imaging area is changeable and detection program identification information for identifying detection programs for detecting a predetermined object from an image captured by the camera are correlated; and
a detection unit configured to perform a process of identifying a detection program corresponding to an imaging area of the cameras using the table information stored in the storage unit and detecting the object from the image captured by the camera using the identified detection program.

2. The image processing device according to claim 1, further comprising:
a control unit configured to instruct the camera to set the imaging area of the camera to a predetermined imaging area,
wherein the detection unit identifies the detection program using the table information on the basis of the imaging area identification information for identifying the predetermined imaging area set by the control unit.

3. The image processing device according to claim 2,
wherein the storage unit stores imaging schedule information in which at least imaging time information for defining a time at which an image is captured by the camera and the imaging area identification information are correlated, and
wherein the control unit instructs the camera on the basis of the imaging schedule information stored in the storage unit.

4. The image processing device according to claim 1,
wherein, when the camera sets the imaging area to the predetermined imaging area, the detection unit identifies the detection program using the table information on the basis of the imaging area identification information for identifying the predetermined imaging area transmitted from the camera.

5. The image processing device according to claim 4, further comprising:
a control unit configured to cause the camera to set image schedule information in which at least imaging time information for defining a time at which an image is captured by the camera and the imaging area identification information are correlated.

6. The image processing device according to claim 3 or claim 5,
wherein the table information is information in which camera identification information for identifying a plurality of cameras, the imaging area identification information, and the detection program identification information are correlated,
wherein the imaging schedule information is information in which the imaging time information, the camera identification information, and the imaging area identification information are correlated, and
wherein the detection unit and the control unit identify the camera using the camera identification information.

7. The image processing device according to claim 1,
wherein the detection unit performs a preliminary process on an image captured by the camera before performing the process of detecting the object from the image captured by the camera using the identified detection program.

8. The image processing device according to claim 7,
wherein the table information is information in which the imaging area identification information, the detection program identification information, and preliminary process identification information for identifying the preliminary process are correlated, and
wherein the detection unit performs the preliminary process based on the imaging area of the camera using the table information.

9. The image processing device according to claim 3 or claim 5,
wherein the control unit performs control such that imaging conditions of the camera are changed according to the image captured by the camera.

10. The image processing device according to claim 3 or claim 5,
wherein the control unit changes the imaging time information according to a state of the object detected by the detection unit.

11. An image processing method comprising:
a first step of causing a storage unit to store table information in which at least imaging area identification information for identifying imaging areas of a camera of which an imaging area is changeable and detection program identification information for identifying detection programs for detecting a predetermined object from an image captured by the camera are correlated; and
a second step of causing a detection unit to perform a process of identifying a detection program corresponding to an imaging area of the cameras using the table information stored in the storage unit and detecting the object from the image captured by the camera using the identified detection program.

12. A non-transitory computer readable storage medium storing an image processing program that causes a computer to perform:
a first step of storing table information in which at least imaging area identification information for identifying imaging areas of a camera of which an imaging area is changeable and detection program identification information for identifying detection programs for detecting a predetermined object from an image captured by the camera are correlated; and
a second step of performing a process of identifying a detection program corresponding to an imaging area of the cameras using the table information and detecting the object from the image captured by the camera using the identified detection program.
